# EUROPEAN PATENT SPECIFICATION

(11) **EP 4 135 268 B1**
(45) Date of publication and mention of the grant of the patent: **02.07.2025**
(21) Application number: 21306106.2
(22) Date of filing: 09.08.2021
(51) Int. Cl.: H04L 12/40, H04L 12/403

(54) **METHODS, SYSTEMS AND DEVICES FOR COORDINATING A PLURALITY OF NODES IN A 10BASE-T1S ETHERNET NETWORK**
VERFAHREN, SYSTEME UND VORRICHTUNGEN ZUR KOORDINATION MEHRERER KNOTEN IN EINEM 10BASE-T1S-ETHERNET-NETZWERK
PROCÉDÉS, SYSTÈMES ET DISPOSITIFS PERMETTANT DE COORDONNER UNE PLURALITÉ DE N UDS DANS UN RÉSEAU ETHERNET 10BASE-T1S

(43) Date of publication of application: 15.02.2023
(73) Proprietor: Schneider Electric Industries SAS, 92500 Rueil-Malmaison (FR)
(72) Inventor: MICHEL, Julien, 38220 MONTCHABOUD (FR); BERRONDO, Vincent, 38000 GRENOBLE (FR)
(74) Representative: Lavoix

(56) References cited:
- EP-A2- 2 094 052
- US-A1- 2019 313 446
- US-A1- 2020 136 993
- "Phoneline networking transceivers - Enhanced physical, media access, and link layer specifications; G.9954 (01/07)", ITU-T STANDARD, INTERNATIONAL TELECOMMUNICATION UNION, GENEVA ; CH, no. G.9954 (01/07), 9 January 2007 (2007-01-09), pages 1 - 276, XP017466058

## Description

### TECHNICAL FIELD

The present disclosure relates to Ethernet communications and relates more particularly to improvements of physical layer collision avoidance methods for Ethernet networks, such as single twisted pair Ethernet networks (10BASE-T1S).

### BACKGROUND

Electrical systems such as electrical panels usually comprise many electrical devices, such as so-called "smart" switchgear devices, measurement devices, and so on, having communication capabilities for operation as a node on a wired communications network.

For practical reasons, the nodes are often connected to the network in a bus-like arrangement, e.g. with a multidrop network topology, in which a data carrier is shared by multiple nodes.

It is thus necessary for the nodes of the network to implement a collision avoidance method, in order to avoid collisions and data loss when communicating on the network.

Examples of collision avoidance systems can be found in the following documents: EP 2094052 A2, US 2019/313446 A1, US 2020/136993 A1 and the technical recommendation of the International Telecommunications Union ITU-T G.9954 (01/2007) "Phoneline networking transceivers - Enhanced physical, media access, and link layer specifications".

For example, some networks, such as 10BASE-T1S Ethernet networks, implement a physical layer collision avoidance (PLCA) method, as described in the IEEE 802.3cg-2019 standard. This method relies in part on the assumption that each node has been assigned a unique node identifier or PLCA identifier.

A drawback of this method is that there is no standard method to automatically assign a PLCA identifier to a node. Thus, users must manually allocate a unique identifier to each node connected to the network. This may be impractical in many applications, in which nodes are often added to the network or removed from the network during operation. This is for example the case in electrical distribution systems and especially electrical panels, in which electrical devices may have to be replaced during installation, or repairs, or routine maintenance operations.

Thus, every time a node is added to the network, a unique identifier must be assigned to this node. This operation can be particularly time consuming and error prone in networks comprising a large number of nodes, as is often the case in electrical distribution systems. Users tasked with this operation must keep track of which identifiers have been already allocated in order to avoid assigning the same identifier twice to two different nodes. Failure to do so may result in data loss and improper operation of the electrical system.

### SUMMARY

It is therefore desirable to provide solutions to improve physical layer collision avoidance methods in wired communication networks.

An aspect of the invention relates to a method for configuring a plurality of nodes in a 10BASE-T1S Ethernet network as defined by claim 1

According to this method, the first and/or second coordinator nodes is/are automatically selected prior to automatic allocation of the transmit opportunity slots to the other device nodes. Unique PLCA identifiers can then be allocated dynamically and in a decentralized fashion to the nodes of the network. The system can update itself to allow for fewer or for more nodes. A continual looped cycle on the part of the ordinary device nodes allows for an automatic re-selection of a different first and/or second coordinator node after network start-up in case one or the other coordinator nodes disappear. In that case, thanks to the invention, a new coordinator node will be elected to replace the missing coordinator node, in order to allow the PLCA system to continue to operate.

This is a distributed solution as it does not depend on any particular privileged device on the network. Instead, the method is decentralized and implemented by the devices connected to the network.

In other embodiments, the invention may advantageously comprise one or more of the technical features, as defined in any one of claims 2 to 14**.**

The invention further relates to a system, as defined by claim 15.

### BRIEF DESCRIPTION OF THE DRAWINGS

The invention will be further understood upon reading the following description, provided solely as a non-limiting example, and made in reference to the appended drawings, in which:
Fig. 1 is a schematic diagram of a network comprising a plurality of nodes according to embodiments of the invention;
Fig. 2 is a block diagram of a node of the network of Figure 1 according to an embodiment;
Fig. 3 is a chronogram illustrating a transmission cycle in the network of Figure 1;
Fig. 4 is a flow chart depicting an exemplary method for automatically selecting a first coordinator node among the nodes of the network of Figure 1;
Fig. 5 is a flow chart depicting an exemplary method for automatically selecting a second coordinator node among the nodes of the network of Figure 1;
Fig. 6 is a flow chart depicting an exemplary method for automatic allocation of PLCA identifier to nodes of the network of Figure 1;
Fig. 7 is a flow chart depicting an exemplary method for automatic allocation of a PLCA identifier by nodes of the network of Figure 1.

### DETAILED DESCRIPTION OF SOME EMBODIMENTS

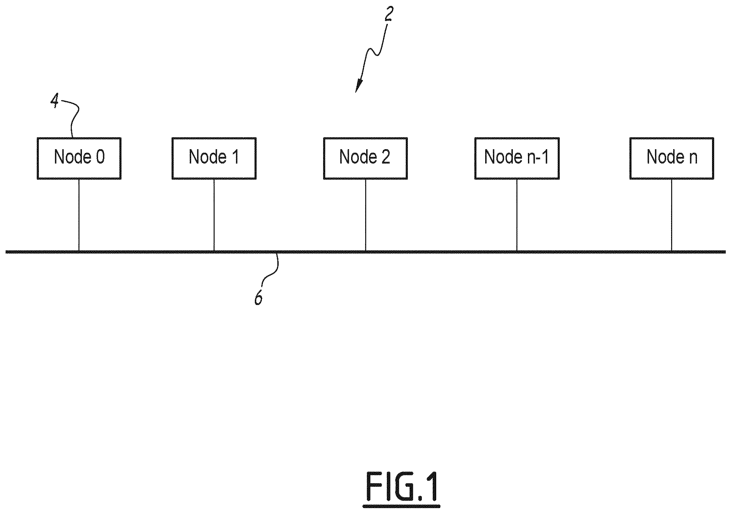

Figure 1 illustrates an exemplary network according to embodiments of the invention.

A system 2 comprises a plurality of nodes 4 connected to a wired communications network 6, preferably a multidrop network.

Preferably, the Ethernet network is a single twisted pair Ethernet network, also known as a 10BASE-T1S network, as described in the IEEE 802.3cg-2019 standard.

In the illustrated example, the nodes 4 are connected to a network media such as a single Ethernet cable 6, preferably with a multidrop topology. Other embodiments are possible, such as a daisy chain topology (using only one network interface per node) or a point-to-point topology.

In this example, the system 2 comprises n+1 nodes, where "n" is a nonzero integer.

The nodes 4 are numbered from "Node 0" through "Node n", and only some of the nodes 4 are illustrated on Figure 1 for simplicity.

For example, the Ethernet cable 6 is a single twisted pair Ethernet cable.

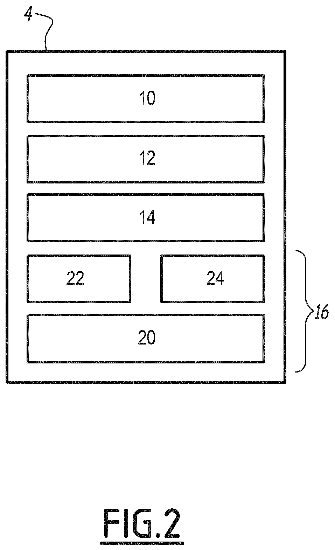

Figure 2 schematically illustrates an exemplary node 4.

Preferably, the nodes 4 are electrical devices, such as switchgear devices, or electrical measurement devices. The nodes 4 are preferably part of an electrical system such as an electrical distribution system, or an industrial control system, or the like.

For example, one or mode nodes 4 may be removable electrical switchgear devices mounted in an electrical panel or in an electrical cabinet.

Other embodiments are nonetheless possible.

In some embodiments, each node 4 is configured to implement a main function 10 in the system 2, such as interrupting an electrical current, or measuring electrical parameters, or detecting an electrical fault, or the like, depending on the nature of the corresponding device.

Each node 4 comprises a processor 12, a memory 14 and a network interface 16 configured to implement a network stack 20. For example, the network interface 16 comprises an Ethernet connector for connecting to the Ethernet network 6.

Each node 4 also comprises a unique physical identifier (UID) identifying the corresponding node of the network (such as a hardware identifier of that node, e.g. a MAC address of that node), as will be explained below.

According to advantageous aspects, the node 4 (or the network interface 16) may be configured to store a first identifier 22 denoting its role as a coordinator node or an ordinary node. The node 4 is configured to store a unique network identifier 24 for identifying the node 4 on the network 6. Other embodiments are nonetheless possible.

In what follows, the first identifier 22 will also be named first parameter, in order to prevent confusion with the physical identifier or with the network identifier.

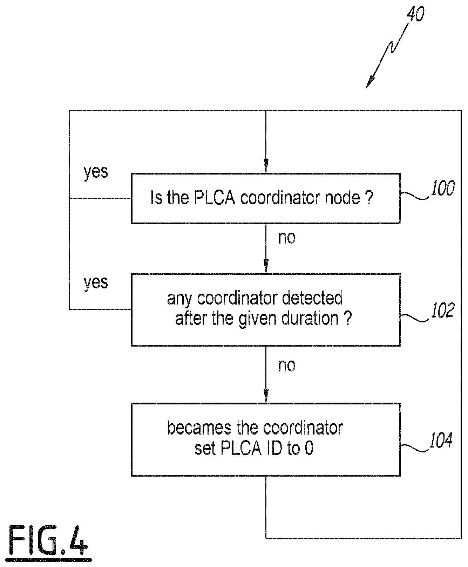

The memory 14 stores instructions and/or computer code configured to, when executed by the processor 12, cause the processor 12 to execute methods for coordinating a plurality of nodes 4, as will be described herein in reference to Figures 4 through 7.

In this specification, the expression "processor" refers not only to electronic controller devices including a processor or a microprocessor, but also to other equivalent elements such as programmable logic controllers (PLC), application-specific integrated circuits (ASIC), field-programmable gate array (FGPA) circuits, logic circuits, analog electronic circuitry, equivalents thereof, any combination thereof, and any other circuit or processor capable of executing the functions described herein.

The nodes 4 are configured to implement a physical layer collision avoidance (PLCA) process, e.g. as described in clause §148 et seq. of the IEEE 802.3cg-2019 standard.

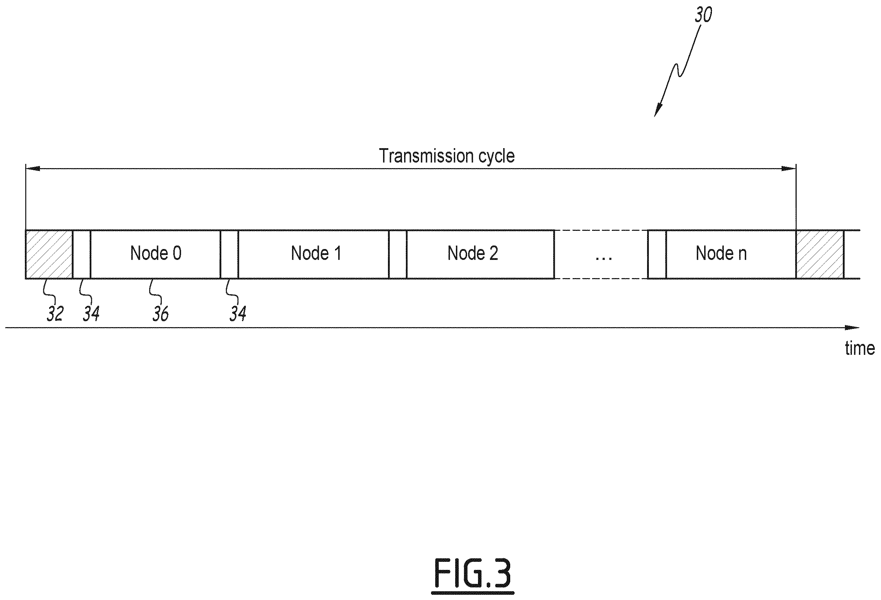

An exemplary mode of operation of the physical layer collision avoidance (PLCA) process is described in reference to the chronogram of Figure 3.

The chronogram 30 of Figure 3 schematically illustrates data exchanged over the network 6 (i.e. over the Ethernet cable 6 shared by the nodes 4) over time, and more specifically during a transmission cycle. Transmission cycles may be repeated periodically with a fixed frequency and a fixed duration.

For example, a first node 4 is initially chosen among the plurality of nodes 4 to act as a first coordinator node, or PLCA coordinator node.

The first coordinator node is configured to periodically send a PLCA beacon to the network to initialize each respective transmission cycle of a PLCA process.

The first coordinator node, which is noted "Node 0" in this example, is configured to periodically send (broadcast) a beacon 32, also named PLCA beacon, to the Ethernet network in order to initiate a new transmission cycle.

A second coordinator node is also initially chosen among the plurality of nodes 4 to act as a second coordinator node, also named identifier-manager coordinator node.

The second coordinator node is configured to, for example during each transmission cycle, open a plurality of separate transmission opportunities (TO), each transmission opportunity allowing only one of said nodes 4 to send data to the network 6.

More precisely, the second coordinator node is configured to allocate a PLCA identifier to any ordinary node that has no allocated PLCA identifier.

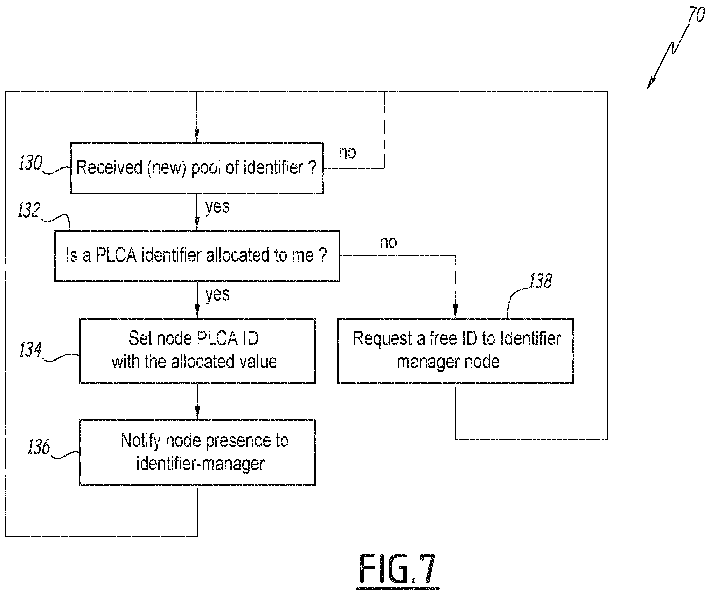

For example, at the beginning, until any node has been allocated a PLCA identifier, and whenever a new node is being allocated a PLCA identifier, the second coordinator node is using its transmit opportunity to send a message containing the list of allocated PLCA identifiers and the corresponding nodes, so that any node may know what PLCA identifier has been allocated to it. Once a node has been allocated a PLCA identifier (and has taken this allocation into account as will be described in reference to Figure 7 below) then that node may use its transmit opportunity window at every PLCA cycle. Possibly this can be done even if the second coordinator has not finished allocating a PLCA ID to each node.

In practice, the second coordinator is configured to open a plurality of separate transmission opportunities (TO) each with a unique PLCA identifier (PLCA ID) from a pool (P) of PLCA identifiers provided by the second coordinator, each PLCA identifier being assignable by the second coordinator to a unique physical identifier (UID) each provided by a respective node, each transmission opportunity allowing only one of said nodes to send data to the network at any one time.

In many embodiments, as part of known PLCA processes, transmission opportunities are opened in succession after each other, so that only one node 4 at a time is allowed to broadcast data to the network 6, in order to avoid collisions and data loss.

In the illustrated example, the transmission opportunities are opened according to the PLCA standard mentioned above.

In practice, the maximum length of the transmission opportunity 36 is the same for all nodes 34. However, the length of the transmission opportunity 36 may vary between the different nodes 4, depending on the effective amount of data that needs to be transmitted by said node.

In some examples, the second coordinator node can be configured to give transmission opportunities into the nodes 4 according to a specific predefined order.

In the example of Figure 3, the first transmission opportunity is given to the "Node 0", then the second transmission opportunity is given to the "Node 1", and so on in increasing order until the last node, "Node n". Other embodiments are nonetheless possible.

In some embodiments, the second coordinator node is the same node as the first coordinator node and is assigned the PLCA identifier of the initial transmit opportunity.

However, in other embodiments, the second coordinator node is different from the first coordinator node and is assigned a PLCA identifier different to the PLCA identifier of the initial transmit opportunity.

Once the last remaining node 4 has been given a transmit opportunity, the process starts over with the first coordinator node sending a new PLCA beacon 32 to initiate a new transmission cycle.

An aspect of the invention is more particularly concerned with automatically allocating PLCA identifiers to the nodes 4, as well as automatically allocating the roles of the first coordinator node (the PLCA coordinator) and optionally the second coordinator node (the identifier-manager coordinator node). Exemplary methods are described in reference to Figures 4-7.

In many embodiments, the method for coordinating nodes according to embodiments of the invention comprises steps consisting of:
- repeatedly listening for a selected coordinator broadcast to the network during one or more listening cycles, each listening cycle being at least as long as a transmission cycle,
- selecting a node as selected coordinator node if capable of being so selected and if said node has not detected said selected coordinator broadcast during a listening cycle,
- not selecting a node as selected coordinator node if said node has received said selected coordinator broadcast during at least one listening cycle.

As illustrated by Figure 4, automatically selecting the first coordinator node as the selected coordinator node comprises, by each node 4 of the network:
- repeatedly listening for a selected coordinator broadcast comprising a PLCA beacon during one or more first listening cycles, each first listening cycle being at least as long as a transmission cycle,
- selecting a node as the first coordinator node if capable of being the first coordinator node and if said node has not detected said PLCA beacon during one first listening cycle,
- not selecting a node as the first coordinator node if said node has received said PLCA beacon during at least one first listening cycle, and upon selection of the first coordinator node, assigning an initial transmit opportunity to the newly selected first coordinator node.

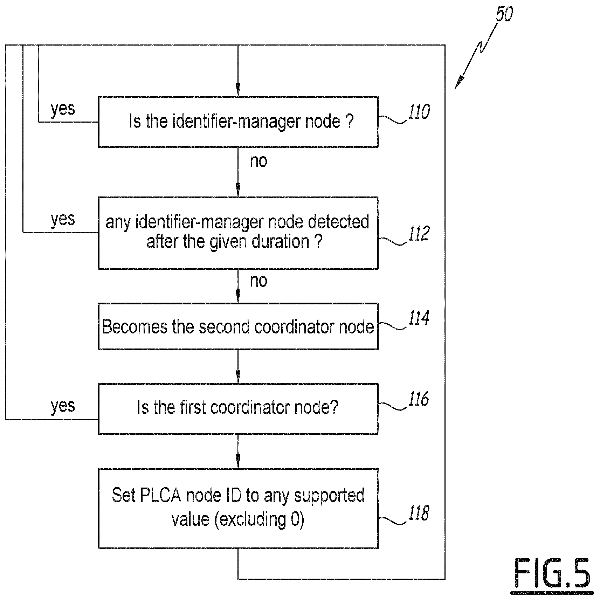

And, as illustrated by Figure 5, automatically selecting the second coordinator node as the selected coordinator node comprises, by each node of the network:
- repeatedly listening for a selected coordinator broadcast comprising a second coordinator node presence signal during one or more second listening cycles, each second listening cycle being at least as long as a transmission cycle,
- selecting a node as the second coordinator node if capable of being the second coordinator node and if said node has not detected the second coordinator node presence signal during one second listening cycle,
- not designating a node as the second coordinator node if said node has received the second coordinator node presence signal during at least one second listening cycle.

It is to be noted that, in many alternative embodiments, the method steps described herein could be executed in a different order. One or more method steps could be omitted or replaced by functionally equivalent method steps. One or more method steps could be combined into a method step, or dissociated into different method steps.

According to this method, the first coordinator node and optionally also the second coordinator node are automatically selected prior to any automatic allocation of the transmit opportunity slots to the other device nodes. Unique PLCA identifiers can thus be allocated dynamically and in a decentralized fashion to the nodes 4 of the network 6. The system can thus update itself to allow for fewer or for more nodes. A continual looped cycle on the part of the ordinary device nodes allows for an automatic re-selection of a different first and/or second coordinator nodes after network start-up in case one or the other coordinator nodes disappear. In that case, thanks to the invention, a new coordinator node will be elected to replace the missing coordinator node, in order to allow the PLCA system to continue to operate.

This distributed solution does not depend on any particular privileged device on the network. Instead, the method is decentralized, as it is implemented by at least several nodes of the network.

Thus, even if one or more devices are removed from the system 2 during operation, for example due to maintenance, or repairs, or replacement, or any other reason, then the PLCA collision avoidance system can resiliently continue to operate, by distributing new identifiers and/or new roles to the remaining devices. Similarly, if new devices are added to the system 2 during operation, the PLCA collision avoidance system can accommodate the newly installed devices, by distributing new identifiers and/or new roles to the new devices.

In many embodiments, the method comprises automatically assigning a unique PLCA identifier to each node by means of:
a) each node broadcasting its presence, optionally broadcasting its presence periodically, to the network so that the second coordinator node may assign any unassigned PLCA identifiers to any unassigned nodes; and/or
b) each unassigned node deducing its PLCA identifier from a PLCA identifier message broadcast, optionally broadcast periodically, by the second coordinator node.

In many embodiments, the second coordinator node repeatedly broadcasts the list of unallocated PLCA identifiers to the network until all nodes have been allocated a transmit PLCA identifier from the list of unallocated PLCA identifiers.

Each assigned node (e.g. a node allocated with a PLCA identifier) is configured to signal its presence and/or transmit data during its transmit opportunity, until said node is disconnected from or unavailable to the network.

Each assigned node listens for the PLCA beacon and broadcasts a heartbeat and/or data during its transmit opportunity, until said node is disconnected from the network; and/or becomes unassigned (e.g. having its PLCA identifier removed).

According to advantageous embodiments, during operation, the second coordinator node updates the PLCA identifier list to record the allocated PLCA identifiers.

In other words, the second coordinator node is configured to periodically update any PLCA identifier message with any changes in the pool of PLCA identifiers.

The second coordinator node updates the PLCA identifier list to free or remove an allocated PLCA identifier when the corresponding node is detected as disconnected from the network or unassigned (e.g. having its PLCA identifier removed).

In other words, the second coordinator node is arranged to free a PLCA identifier of a node disconnected from, or unavailable to, the network and update the pool of PLCA identifiers accordingly.

For example, a node 4 is considered to be disconnected from the network or unassigned (e.g. having its PLCA identifier removed or unallocated) when no heartbeat and/or no data has been received from said node 4 during a predefined period of time, which may be longer than the duration of the transmission cycle.

Other embodiments are nonetheless possible.

Similarly, the second coordinator node updates the PLCA identifier list to allocate a new PLCA identifier when a new corresponding node is detected as newly connected or newly assigned to the network.

In other words, the second coordinator node is arranged to assign a free PLCA identifier to a new node connected or available to the network and update the pool of PLCA identifiers accordingly.

In some embodiments, the allocation of an unallocated PLCA identifier from the list to a new node can be based on a predefined scheme, for example by randomly selecting an unallocated PLCA identifier from the list, or by selecting the first unallocated PLCA identifier from the list, of by selecting an unallocated PLCA identifier from the list using a predefined order.

Preferably, the second coordinator node periodically broadcasts to the network the pool (the list) of PLCA identifiers updated with any changes detected by the second coordinator node.

In some embodiments, the list of PLCA identifiers may be a list of elements, or a linked list, or a database, or any appropriate data structure.

Each PLCA identifier is a number (e.g., an integer comprised between 0 and 255, as specified in the standard IEEE 802.3cg referenced above) uniquely identifying the node in the network 4. The PLCA identifier is used to define the order in which the nodes are given transmit opportunities, as specified in the standard IEEE 802.3cg referenced above.

As illustrated in the drawings, during each transmission cycle, the node with the PLCA identifier "0" is the first to receive a transmit opportunity, the node with the PLCA identifier "1" is the second to receive a transmit opportunity, and so on, until the node with the PLCA identifier "n" is the last to receive a transmit opportunity.

Preferably, the list (or pool) of PLCA identifiers is stored in memory of the second coordinator node.

The list may associate, to each allocated PLCA identifier, a unique physical identifier (UID) identifying the corresponding node of the network (such as a hardware identifier of that node, e.g. a MAC address of that node).

In addition, each node comprises a memory for storing a unique PLCA identifier (PLCA ID) assigned to said node. Each node stores its unique physical identifier (UID) in its memory. Optionally, the unique physical identifier (UID) of each node is programmable.

An embodiment 40 of the method for designating the first coordinator node is illustrated at Figure 4. This method 4 is described in reference to a single node 4, but in practice an instance of this method is executed concurrently by several nodes, or even by every node 4 of the network.

During a step 100, after initialization, each node 4 automatically checks whether it is already the first coordinator node, for example by checking the state or value of its role identifier 22.

If the node 4 is identified as the first coordinator node, then the process stops successfully.

If the node 4 is not identified as the first coordinator node, then during a step 102, the node 4 checks whether the first coordinator node has been identified on the network 6 during the duration of the first listening cycle, for example by checking whether a PLCA beacon 32 has been received during the first listening cycle.

If the first coordinator node has been identified during the first listening cycle, then the process stops successfully.

Otherwise, during a step 104, the node 4 designates itself as the new first coordinator node, for example by setting its PLCA identifier (PLCA ID) to 0 (to become the first node to receive a transmit opportunity). The role identifier 22 of the node 4 may be updated in consequence.

An embodiment 50 of the method for designating the second coordinator node is illustrated at Figure 5. This method is described in reference to a single node 4, but in practice an instance of this method is executed concurrently by many nodes 4, preferably by every node 4 of the network.

During a step 110, after initialization, each node 4 automatically checks whether it is already the second coordinator node, for example by checking the state or value of its role identifier 22.

If the node 4 is identified as the second coordinator node, then the process stops successfully.

If the node 4 is not identified as the second coordinator node, then during a step 112, the node 4 checks whether the second coordinator node has been identified on the network 6 during the second listening cycle. For example, the node 4 checks whether a list of PLCA identifiers has been broadcasted on the network 6 during the second listening cycle.

If the second coordinator node has been identified during the second listening cycle, then the process stops successfully.

Otherwise, during a step 114, the node 4 designates as the second coordinator node.

Then, at step 116, the newly designated second coordinator node determines whether it already has the role of first coordinator node.

In case the node is identified as being both the first coordinator node and the second coordinator role, then the method stops successfully.

If the newly designated second coordinator node is not the first coordinator node, then at step 118, the newly designated second coordinator node sets its PLCA identifier of the (PLCA ID) to a different value than the PLCA identifier of the first coordinator node (e.g., a value different from 0). For example, the newly designated second coordinator node is the "Node 1" identified on Figures 1 and 3.

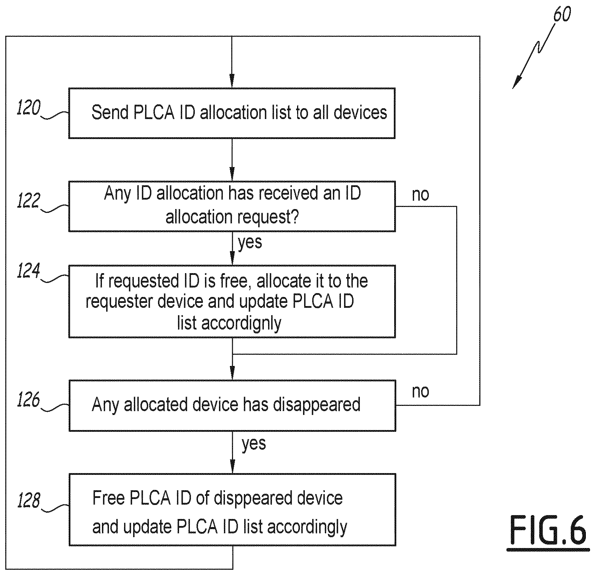

An embodiment 60 of the method for managing PLCA identifiers by the second coordinator node is illustrated by Figure 6.

For example, during a step 120, after having been assigned the role of second coordinator node, the second coordinator node sends a list of PLCA identifiers (PLCA ID) to the remaining nodes 4, for example by broadcasting the list to all nodes 4 of the network.

In some embodiments, if the nodes know in advance all possible PLCA identifiers, the second coordinator node may broadcast a list of the allocated PLCA identifiers, each node being then arranged to automatically determine, by comparing the list of already allocated PLCA identifiers with the list of all possible PLCA identifiers, whether their requested identifier has already been allocated.

In other embodiments, the second coordinator node may broadcast a list of free (i.e. unallocated) PLCA identifiers and send to each requester node independently a confirmation that their requested id has been successfully allocate.

Thus, in these various embodiments, the nodes are able to know which PLCA identifiers are free and whether or not the requested PLCA identifier has been successfully allocated.

At step 122, the second coordinator node checks whether any PCLA identifier allocation request has been received from any node 4 (or device) during a certain time limit, for example during the transmission cycle.

If yes, then during a step 124, the second coordinator node allocates the requested PLCA identifier to the requester node 4, provided that the requested PLCA identifier is available, i.e. has not been allocated to another node 4. The requested PLCA identifier is not allocated if it is found to be unavailable by the second coordinator node. The method then jumps to step 126.

It no PCLA identifier allocation request has been received during the time limit (during step 122), then the method jumps directly to the step 126.

During a step 126, the second coordinator node checks whether any node 4 with an allocated PLCA identifier has disappeared during a certain time limit, for example during the transmission cycle.

If, during step 126, one or more nodes 4 with an allocated PLCA identifier are found to have disappeared, then, during a step 128, the corresponding PLCA identifier(s) are freed and the list is updated accordingly. For example, the reference (such as the UID mentioned above, e.g. the network address or the MAC Address) identifying the corresponding node of the network is removed from the list of PLCA identifiers stored in memory of the second coordinator node.

The updated list is then sent to the nodes 4. For example, steps 120 through 128 may be repeated, preferably periodically, during operation of the system 2. In some cases, instead of receiving a full list of all PLCA identifiers, the nodes 4 may only receive an information on whether or not their request for a PLCA identifier has been satisfied.

In many embodiments, whenever a new unallocated device is appearing, the step 122 may consist of detecting the appearance of this new unallocated device on the network by any means (e.g. the node may signal its presence to the second coordinator by an appropriate signal, such as heartbeat message or the like). The step 126 then consists in allocating a free, unallocated PLCA identifier to this new device (provided that there is still unallocated PLCA identifiers ready to be assigned to this new device) and informing said node of its new PLCA identifier, by any means possible.

An embodiment 70 of the method for requesting a PLCA identifier by a node 4 is illustrated by Figure 7. In this embodiment, for the sake of simplicity, two different sub-functions (with different goals) are combined: one function related to requesting a PLCA identifier by a node, and one function dedicated to signaling the node's presence to the second coordinator node, although other embodiments are possible.

This method is described in reference to a single node 4, but in practice an instance of this method is executed concurrently by every node 4 of the network.

Initially, during a step 130, the node 4 verifies whether the list of PLCA identifiers (the pool of identifiers) has been received from the second coordinator node.

For example, the step 130 is executed after the node 4 has executed the methods for self-allocating the role of first coordinator node and second coordinator node (e.g., steps 100-104 and 110-118).

If the list of PLCA identifiers has been correctly received, then during a step 132, the node 4 verifies if a PLCA identifier has been allocated to said node 4, e.g. by reading the contents of the received list of PLCA identifiers.

If no list of PLCA identifiers has been received, then the node 4 continues to listen for the list.

If, during step 132, a PLCA identifier is found to have been allocated to said node 4, then, during a step 134, the node 4 sets its PLCA identifier 24 to the allocated PLCA identifier (e.g. by updating its PLCA identifier 24 with the value of the allocated PLCA identifier read from the received list of PLCA identifiers).

Then, once the allocated PLCA identifier has been set, during a step 134, the node 4 notifies its presence to the second coordinator node, e.g. by broadcasting a heartbeat to the network, or by sending one or more packets of data during the time window corresponding to its own transmit opportunity.

If after the step 132 the node 4 identifies that it has not been allocated any PLCA identifier, then during a step 138, the node 4 sends a request to the second coordinator node for requesting a PLCA identifier.

## Claims

1. A method for configuring a plurality of nodes (4) in a 10BASE-T1S Ethernet network (6), said nodes being configured to implement a physical layer collision avoidance process, hereinafter referred to as "PLCA", wherein the network comprises:
a first coordinator node being configured to periodically send a PLCA beacon to the network to initiate each respective transmission cycle of a PLCA process; and
a second coordinator node being configured to open a plurality of separate transmission opportunities each with a unique PLCA identifier (PLCA ID) from a pool of PLCA identifiers provided by the second coordinator, each PLCA identifier being assignable by the second coordinator to a unique physical identifier each provided by a respective node, each transmission opportunity allowing only one of said nodes to send data to the network at any one time,
wherein the method comprises automatically selecting a selected coordinator node being at least one of the first coordinator node and the second coordinator node, wherein automatically selecting a selected coordinator node comprises, by each node of the network:
repeatedly listening for a selected coordinator broadcast to the network during one or more listening cycles, each listening cycle being at least as long as a transmission cycle,
selecting a node as selected coordinator node if capable of being so selected and if said node has not detected said selected coordinator broadcast during a listening cycle,
not selecting a node as selected coordinator node if said node has received said selected coordinator broadcast during at least one listening cycle.

2. The method according to claim 1, wherein automatically selecting the first coordinator node as the selected coordinator node comprises, by each node of the network:
repeatedly listening for a selected coordinator broadcast comprising a PLCA beacon during one or more first listening cycles, each first listening cycle being at least as long as a transmission cycle,
selecting a node as the first coordinator node if capable of being the first coordinator node and if said node has not detected said PLCA beacon during one first listening cycle,
not selecting a node as the first coordinator node if said node has received said PLCA beacon during at least one first listening cycle, and
upon selection of the first coordinator node, assigning an initial transmit opportunity to the newly selected first coordinator node.

3. The method according to any one of the previous claims, wherein automatically selecting the second coordinator node as the selected coordinator node comprises, by each node of the network,
repeatedly listening for a selected coordinator broadcast comprising a second coordinator node presence signal during one or more second listening cycles, each second listening cycle being at least as long as a transmission cycle,
selecting a node as the second coordinator node if capable of being the second coordinator node and if said node has not detected the second coordinator node presence signal during one second listening cycle,
not designating a node as the second coordinator node if said node has received the second coordinator node presence signal during at least one second listening cycle.

4. The method according to any one of the previous claims, wherein the second coordinator node is the same node as the first coordinator node and is assigned the PLCA identifier of an initial transmit opportunity.

5. The method according to any one of claims 1 to 3, wherein the second coordinator node is different from the first coordinator node and is assigned a PLCA identifier different to the PLCA identifier of an initial transmit opportunity.

6. The method according to any one of the previous claims, wherein the method comprises automatically assigning a unique PLCA identifier to each node by means of:
a) each node broadcasting its presence, optionally broadcasting its presence periodically, to the network so that the second coordinator node may assign any unassigned PLCA identifiers to any unassigned nodes; and/or
b) each unassigned node deducing its PLCA identifier from a PLCA identifier message broadcast, optionally broadcast periodically, by the second coordinator node.

7. The method according to claim 6, wherein the second coordinator node periodically updates any PLCA identifier message with any changes in the pool of PLCA identifiers.

8. The method according to either one of claims 6 or 7, wherein each assigned node signals its presence and/or transmits data during its transmit opportunity, until said node is disconnected from or unavailable to the network.

9. The method according to any one of claims 6 to 8, wherein the second coordinator node is arranged to free a PLCA identifier of a node disconnected from, or unavailable to, the network and update the pool of PLCA identifiers accordingly.

10. The method according to any one of claims 6 to 9, wherein the second coordinator node is arranged to assign a free PLCA identifier to a new node connected or available to the network and update the pool of PLCA identifiers accordingly.

11. The method according to any one of claims 6 to 10, wherein the second coordinator node comprises a memory for storing the pool of PLCA identifiers.

12. The method according to any one of claims 6 to 11, wherein each node comprises a memory for storing a unique PLCA identifier (PLCA ID) assigned to said node.

13. The method according to claim 12, wherein each node stores its unique physical identifier in its memory.

14. The method according to any one of the previous claims, wherein the unique physical identifier of each node is programmable.

15. A system (2) comprising a plurality of nodes (4) connected to a 10BASE-T1S Ethernet network, said nodes being configured to implement a physical layer collision avoidance process, hereinafter referred to as "PLCA", each node comprising a processor(12), a memory (14) and a network interface (16) configured to implement a network stack,
wherein the memory is storing instructions configured to cause the processor to implement a method for configuring a plurality of nodes,
**characterized in that** the system comprises:
a first coordinator node being configured to periodically send a PLCA beacon to the network to initiate each respective transmission cycle of a PLCA process; and
a second coordinator node being configured to open a plurality of separate transmission opportunities each with a unique PLCA identifier (PLCA ID) from a pool of PLCA identifiers provided by the second coordinator, each PLCA identifier being assignable by the second coordinator to a unique physical identifier each provided by a respective node, each transmission opportunity allowing only one of said nodes to send data to the network at any one time,
and **in that** the method comprises automatically selecting a selected coordinator node being at least one of the first coordinator node and the second coordinator node, wherein automatically selecting a selected coordinator node comprises, by each node of the network:
repeatedly listening for a selected coordinator broadcast to the network during one or more listening cycles, each listening cycle being at least as long as a transmission cycle,
selecting a node as selected coordinator node if capable of being so selected and if said node has not detected said selected coordinator broadcast during a listening cycle,
not selecting a node as selected coordinator node if said node has received said selected coordinator broadcast during at least one listening cycle.

## Patentansprüche

1. Verfahren zum Konfigurieren einer Vielzahl von Knoten (4) in einem 10BASE-T1S-Ethernet-Netz (6), wobei die Knoten konfiguriert sind, um einen Kollisionsvermeidungsprozess einer physikalischen Schicht zu implementieren, der hierin nachstehend als "PLCA" bezeichnet wird, das Netz umfassend:
einen ersten Koordinatorknoten, der konfiguriert ist, um periodisch eine PLCA-Bake an das Netz zu senden, um jeden jeweiligen Übertragungszyklus eines PLCA-Prozesses zu initiieren; und
einen zweiten Koordinatorknoten, der konfiguriert ist, um eine Vielzahl von separaten Übertragungsgelegenheiten zu öffnen, jede mit einer eindeutigen PLCA-Kennung (PLCA-ID) aus einem Pool von PLCA-Kennungen, die von dem zweiten Koordinator bereitgestellt werden, wobei jede PLCA-Kennung von dem zweiten Koordinator einer eindeutigen physikalischen Kennung zuweisbar ist, die jeweils von einem entsprechenden Knoten bereitgestellt wird, wobei jede Übertragungsgelegenheit es nur einem der Knoten erlaubt, zu einem beliebigen Zeitpunkt Daten an das Netz zu senden,
wobei das Verfahren ein automatisches Auswählen eines ausgewählten Koordinatorknotens umfasst, der mindestens einer von dem ersten Koordinatorknoten und dem zweiten Koordinatorknoten ist, wobei ein automatisches Auswählen eines ausgewählten Koordinatorknotens durch jeden Knoten des Netzes Folgendes umfasst:
wiederholtes Abhören einer ausgewählten Koordinatorausstrahlung an das Netz während eines oder mehrerer Abhörzyklen, wobei jeder Abhörzyklus mindestens so lang wie ein Übertragungszyklus ist,
Auswählen eines Knotens als ausgewählter Koordinatorknoten, wenn es möglich ist, diesen auszuwählen, und wenn der Knoten die ausgewählte Koordinatorausstrahlung während eines Abhörzyklus nicht erkannt hat,
nicht Auswählen eines Knotens als ausgewählten Koordinatorknoten, wenn der Knoten die ausgewählte Koordinatorausstrahlung während mindestens eines Abhörzyklus empfangen hat.

2. Verfahren nach Anspruch 1, wobei das automatische Auswählen des ersten Koordinatorknotens als ausgewählten Koordinatorknoten durch jeden Knoten des Netzes Folgendes umfasst:
wiederholtes Abhören einer ausgewählten Koordinatorausstrahlung, umfassend eine PLCA-Bake, während eines oder mehrerer erster Abhörzyklen, wobei jeder erste Abhörzyklus mindestens so lang ist wie ein Übertragungszyklus,
Auswählen eines Knotens als ersten Koordinationsknoten, wenn er in der Lage ist, der erste Koordinationsknoten zu sein, und wenn der Knoten die PLCA-Bake während eines ersten Abhörzyklus nicht erkannt hat,
nicht Auswählen eines Knotens als ersten Koordinationsknoten, wenn der Knoten die PLCA-Bake während mindestens eines ersten Abhörzyklus empfangen hat, und
bei Auswählen des ersten Koordinatorknotens, Zuweisen einer anfänglichen Übertragungsgelegenheit an den neu ausgewählten ersten Koordinatorknoten.

3. Verfahren nach einem der vorherigen Ansprüche, wobei ein automatisches Auswählen des zweiten Koordinatorknotens als ausgewählten Koordinatorknoten durch jeden Knoten des Netzes Folgendes umfasst
wiederholtes Abhören einer ausgewählten Koordinatorausstrahlung, die ein zweites Koordinatorknoten-Präsenzsignal enthält, während eines oder mehrerer zweiter Abhörzyklen, wobei jeder zweite Abhörzyklus mindestens so lang ist wie ein Übertragungszyklus,
Auswählen eines Knotens als zweiten Koordinationsknoten, wenn er in der Lage ist, der zweite Koordinationsknoten zu sein, und wenn dieser Knoten das Präsenzsignal des zweiten Koordinationsknotens während eines zweiten Abhörzyklus nicht erkannt hat,
nicht Bezeichnen eines Knotens als zweiten Koordinationsknoten, wenn dieser Knoten das Präsenzsignal des zweiten Koordinationsknotens während mindestens eines zweiten Abhörzyklus empfangen hat.

4. Verfahren nach einem der vorherigen Ansprüche, wobei der zweite Koordinatorknoten derselbe Knoten wie der erste Koordinatorknoten ist und ihm die PLCA-Kennung einer anfänglichen Übertragungsgelegenheit zugewiesen wird.

5. Verfahren nach einem der Ansprüche 1 bis 3, wobei sich der zweite Koordinatorknoten von dem ersten Koordinatorknoten unterscheidet und ihm eine PLCA-Kennung zugewiesen wird, die sich von der PLCA-Kennung einer anfänglichen Übertragungsgelegenheit unterscheidet.

6. Verfahren nach einem der vorherigen Ansprüche, wobei das Verfahren ein automatisches Zuweisen eines eindeutigen PLCA-Identifikators zu jedem Knoten durch Folgendes umfasst:
a) jeder Knoten strahlt seine Präsenz, optional strahlt er seine Präsenz periodisch, an das Netz aus, sodass der zweite Koordinatorknoten nicht zugewiesene PLCA-Kennungen an nicht zugewiesene Knoten zuweisen kann; und/oder
b) wobei jeder nicht zugewiesene Knoten seine PLCA-Kennung aus einer PLCA-Kennungsnachricht ableitet, die von dem zweiten Koordinatorknoten, optional periodisch, ausgestrahlt wird.

7. Verfahren nach Anspruch 6, wobei der zweite Koordinationsknoten periodisch jede PLCA-Kennungsnachricht mit allen Änderungen in dem Pool der PLCA-Kennungen aktualisiert.

8. Verfahren nach einem der Ansprüche 6 oder 7, wobei jeder zugewiesene Knoten während seiner Übertragungsgelegenheit seine Präsenz signalisiert und/oder Daten überträgt, bis der Knoten von dem Netz getrennt wird oder für das Netz nicht mehr verfügbar ist.

9. Verfahren nach einem der Ansprüche 6 bis 8, wobei der zweite Koordinatorknoten angeordnet ist, um eine PLCA-Kennung eines vom Netz getrennten oder für das Netz nicht verfügbaren Knotens freizugeben und den Pool von PLCA-Kennungen entsprechend zu aktualisieren.

10. Verfahren nach einem der Ansprüche 6 bis 9, wobei der zweite Koordinatorknoten angeordnet ist, um einem neuen, mit dem Netz verbundenen oder für das Netz verfügbaren Knoten eine freie PLCA-Kennung zuzuweisen und den Pool von PLCA-Kennungen entsprechend zu aktualisieren.

11. Verfahren nach einem der Ansprüche 6 bis 10, wobei der zweite Koordinatorknoten einen Speicher zum Speichern des Pools von PLCA-Kennungen umfasst.

12. Verfahren nach einem der Ansprüche 6 bis 11, wobei jeder Knoten einen Speicher zum Speichern einer eindeutigen PLCA-Kennung (PLCA-ID) umfasst, die dem Knoten zugewiesen ist.

13. Verfahren nach Anspruch 12, wobei jeder Knoten seine eindeutige physikalische Kennung in seinem Speicher speichert.

14. Verfahren nach einem der vorherigen Ansprüche, wobei die eindeutige physikalische Kennung von jedem Knoten programmierbar ist.

15. System (2), umfassend eine Vielzahl von Knoten (4), die mit einem 10BASE-T1S-Ethernet-Netz verbunden sind, wobei die Knoten konfiguriert sind, um einen Kollisionsvermeidungsprozess der physikalischen Schicht zu implementieren, hierin nachstehend bezeichnet als "PLCA", wobei jeder Knoten einen Prozessor (12), einen Speicher (14) und eine Netzschnittstelle (16) umfasst, die konfiguriert sind, um einen Netzstapel zu implementieren,
wobei der Speicher Anweisungen speichert, die konfiguriert sind, um den Prozessor zu veranlassen, ein Verfahren zum Konfigurieren einer Vielzahl von Knoten zu implementieren,
**dadurch gekennzeichnet, dass** das System Folgendes umfasst:
einen ersten Koordinatorknoten, der konfiguriert ist, um periodisch eine PLCA-Bake an das Netz zu senden, um jeden jeweiligen Übertragungszyklus eines PLCA-Prozesses zu initiieren; und
einen zweiten Koordinatorknoten, der konfiguriert ist, um eine Vielzahl von separaten Übertragungsgelegenheiten zu öffnen, jede mit einer eindeutigen PLCA-Kennung (PLCA-ID) aus einem Pool von PLCA-Kennungen, die von dem zweiten Koordinator bereitgestellt werden, wobei jede PLCA-Kennung von dem zweiten Koordinator einer eindeutigen physikalischen Kennung zuweisbar ist, die jeweils von einem entsprechenden Knoten bereitgestellt wird, wobei jede Übertragungsgelegenheit es nur einem der Knoten erlaubt, zu einem beliebigen Zeitpunkt Daten an das Netz zu senden,
und dass das Verfahren ein automatisches Auswählen eines ausgewählten Koordinatorknotens umfasst, der mindestens einer von dem ersten Koordinatorknoten und dem zweiten Koordinatorknoten ist, wobei ein automatisches Auswählen eines ausgewählten Koordinatorknotens durch jeden Knoten des Netzes Folgendes umfasst:
wiederholtes Abhören einer ausgewählten Koordinatorausstrahlung an das Netz während eines oder mehrerer Abhörzyklen, wobei jeder Abhörzyklus mindestens so lang wie ein Übertragungszyklus ist,
Auswählen eines Knotens als ausgewählter Koordinatorknoten, wenn es möglich ist, diesen auszuwählen, und wenn der Knoten die ausgewählte Koordinatorausstrahlung während eines Abhörzyklus nicht erkannt hat,
nicht Auswählen eines Knotens als ausgewählten Koordinatorknoten, wenn der Knoten die ausgewählte Koordinatorausstrahlung während mindestens eines Abhörzyklus empfangen hat.

## Revendications

1. Procédé de configuration d'une pluralité de nœuds (4) dans un réseau Ethernet 10BASE-T1S (6), lesdits nœuds étant configurés pour mettre en œuvre un processus d'évitement de collision de la couche physique, ci-après dénommé « PLCA », dans lequel le réseau comprend :
un premier nœud de coordinateur étant configuré pour envoyer périodiquement une balise PLCA au réseau afin de démarrer chaque cycle de transmission respectif d'un processus PLCA ; et
un second nœud de coordinateur étant configuré pour ouvrir une pluralité de possibilités de transmission séparées, chacune avec un identifiant PLCA unique (PLCA ID) à partir d'un groupe d'identifiants PLCA fourni par le second coordinateur, chaque identifiant PLCA pouvant être attribué par le second coordinateur à un identifiant physique unique fourni chacun par un nœud respectif, chaque possibilité de transmission permettant à un seul desdits nœuds d'envoyer des données au réseau à un moment donné quelconque,
dans lequel le procédé comprend la sélection automatique d'un nœud de coordinateur sélectionné étant le premier ou le second nœud de coordinateur, dans lequel la sélection automatique d'un nœud de coordinateur sélectionné comprend, par chaque nœud du réseau :
l'écoute répétée d'une diffusion de coordinateur sélectionné vers le réseau pendant un ou plusieurs cycles d'écoute, chaque cycle d'écoute étant au moins aussi long qu'un cycle de transmission,
la sélection d'un nœud en tant que nœud de coordinateur sélectionné s'il peut être ainsi sélectionné et si ledit nœud n'a pas détecté ladite diffusion de coordinateur sélectionné au cours d'un cycle d'écoute,
la non-sélection d'un nœud en tant que nœud de coordinateur sélectionné si ledit nœud a reçu ladite diffusion de coordinateur sélectionné au cours d'au moins un cycle d'écoute.

2. Procédé selon la revendication 1, dans lequel la sélection automatique du premier nœud de coordinateur en tant que le nœud de coordinateur sélectionné comprend, par chaque nœud du réseau :
l'écoute répétée d'une diffusion de coordinateur sélectionné comprenant une balise PLCA pendant un ou plusieurs premiers cycles d'écoute, chaque premier cycle d'écoute étant au moins aussi long qu'un cycle de transmission,
la sélection d'un nœud en tant que le premier nœud de coordinateur s'il peut être le premier nœud de coordinateur et si ledit nœud n'a pas détecté ladite balise PLCA au cours d'un premier cycle d'écoute,
la non sélection d'un nœud en tant que le premier nœud de coordinateur si ledit nœud a reçu ladite balise PLCA au cours d'au moins un premier cycle d'écoute, et
lors de la sélection du premier nœud de coordinateur, l'attribution d'une possibilité de transmission initiale au premier nœud de coordinateur nouvellement sélectionné.

3. Procédé selon l'une quelconque des revendications précédentes, dans lequel la sélection automatique du second nœud de coordinateur en tant que le nœud de coordinateur sélectionné comprend, par chaque nœud du réseau,
l'écoute répétée d'une diffusion de coordinateur sélectionné comprenant un signal de présence du second nœud de coordinateur pendant un ou plusieurs seconds cycles d'écoute, chaque second cycle d'écoute étant au moins aussi long qu'un cycle de transmission,
la sélection d'un nœud en tant que le second nœud de coordinateur s'il peut être le second nœud de coordinateur et si ledit nœud n'a pas détecté le signal de présence du second nœud de coordinateur au cours d'un second cycle d'écoute,
la non-sélection d'un nœud en tant que le second nœud de coordinateur si ledit nœud a reçu le signal de présence du second nœud de coordinateur au cours d'au moins un second cycle d'écoute.

4. Procédé selon l'une quelconque des revendications précédentes, dans lequel le second nœud de coordinateur est le même nœud que le premier nœud de coordinateur et se voit attribué l'identifiant PLCA d'une possibilité de transmission initiale.

5. Procédé selon l'une quelconque des revendications 1 à 3, dans lequel le second nœud de coordinateur est différent du premier nœud de coordinateur et se voit attribué un identifiant PLCA différent de l'identifiant PLCA d'une opportunité de transmission initiale.

6. Procédé selon l'une quelconque des revendications précédentes, dans lequel le procédé comprend l'attribution automatique d'un identifiant PLCA unique à chaque nœud par les moyens suivants :
a) chaque nœud diffuse sa présence, diffusant facultativement sa présence de manière périodique, dans le réseau de sorte que le second nœud de coordinateur puisse attribuer de quelconques identifiants PLCA non attribués à de quelconques nœuds non attribués ; et/ou
b) chaque nœud non attribué déduit son identifiant PLCA d'un message d'identifiant PLCA diffusé, facultativement diffusé périodiquement, par le second nœud de coordinateur.

7. Procédé selon la revendication 6, dans lequel le second nœud de coordinateur met périodiquement à jour un quelconque message d'identifiant PLCA en fonction de quelconques modifications apportées au groupe d'identifiants PLCA.

8. Procédé selon l'une quelconque des revendications 6 ou 7, dans lequel chaque nœud attribué signale sa présence et/ou transmet des données pendant sa possibilité de transmission, jusqu'à ce que ledit nœud soit déconnecté du réseau ou indisponible pour celui-ci.

9. Procédé selon l'une quelconque des revendications 6 à 8, dans lequel le second nœud de coordinateur est agencé pour libérer un identifiant PLCA d'un nœud déconnecté du réseau ou indisponible pour celui-ci et mettre à jour le groupe d'identifiants PLCA en conséquence.

10. Procédé selon l'une quelconque des revendications 6 à 9, dans lequel le second nœud de coordinateur est agencé pour attribuer un identifiant PLCA libre à un nouveau nœud connecté au réseau ou disponible pour celui-ci, et mettre à jour le groupe d'identifiants PLCA en conséquence.

11. Procédé selon l'une quelconque des revendications 6 à 10, dans lequel le second nœud de coordinateur comprend une mémoire pour stocker le groupe d'identifiants PLCA.

12. Procédé selon l'une quelconque des revendications 6 à 11, dans lequel chaque nœud comprend une mémoire pour stocker un identifiant PLCA unique (PLCA ID) attribué audit nœud.

13. Procédé selon la revendication 12, dans lequel chaque nœud stocke son identifiant physique unique dans sa mémoire.

14. Procédé selon l'une quelconque des revendications précédentes, dans lequel l'identifiant physique unique de chaque nœud est programmable.

15. Système (2) comprenant une pluralité de nœuds (4) connectés à un réseau Ethernet 10BASE-T1S, lesdits nœuds étant configurés pour mettre en œuvre un processus d'évitement de collision de couche physique, ci-après dénommé « PLCA », chaque nœud comprenant un processeur (12), une mémoire (14) et une interface réseau (16) configurée pour mettre en œuvre une pile réseau,
dans lequel la mémoire stocke des instructions configurées pour amener le processeur à mettre en œuvre un procédé de configuration d'une pluralité de nœuds,
**caractérisé en ce que** le système comprend :
un premier nœud de coordinateur étant configuré pour envoyer périodiquement une balise PLCA au réseau afin de démarrer chaque cycle de transmission respectif d'un processus PLCA ; et
un second nœud de coordinateur étant configuré pour ouvrir une pluralité de possibilités de transmission séparées, chacune avec un identifiant PLCA unique (PLCA ID) à partir d'un groupe d'identifiants PLCA fourni par le second coordinateur, chaque identifiant PLCA pouvant être attribué par le second coordinateur à un identifiant physique unique fourni chacun par un nœud respectif, chaque possibilité de transmission permettant à un seul desdits nœuds d'envoyer des données au réseau à un moment donné quelconque,
et **en ce que** le procédé comprend la sélection automatique d'un nœud de coordinateur sélectionné étant au moins l'un du premier nœud de coordinateur et du second nœud de coordinateur, dans lequel la sélection automatique d'un nœud de coordinateur sélectionné comprend, par chaque nœud du réseau :
l'écoute répétée d'une diffusion de coordinateur sélectionné vers le réseau pendant un ou plusieurs cycles d'écoute, chaque cycle d'écoute étant au moins aussi long qu'un cycle de transmission,
la sélection d'un nœud en tant que nœud de coordinateur sélectionné s'il peut être ainsi sélectionné et si ledit nœud n'a pas détecté ladite diffusion de coordinateur sélectionné au cours d'un cycle d'écoute,
la non-sélection d'un nœud en tant que nœud de coordinateur sélectionné si ledit nœud a reçu ladite diffusion de coordinateur sélectionné au cours d'au moins un cycle d'écoute.
